# EUROPEAN PATENT APPLICATION

(11) **EP 4 707 743 A1**
(43) Date of publication of application: **11.03.2026**
(21) Application number: 25198121.3
(22) Date of filing: 26.08.2025
(51) Int. Cl.: G01C 21/34, G01C 21/36

(54) **METHOD, DEVICE, MEDIUM AND PRODUCT FOR NAVIGATION**

(30) Priority: 26.08.2024 CN 202411179594
(71) Applicant: Cariad (China) Co., Ltd., Beijing 100028 (CN)
(72) Inventor: TANG, Shuai, Beijing, 100028 (CN)
(74) Representative: Müller-Boré & Partner Patentanwälte PartG mbB

(57) **Abstract**

Embodiments of the present disclosure relate to method, device, medium and product for navigation. The method comprises receiving (202) an indication of a prohibited area input by users. The method also comprises generating (204), based on the indication of the prohibited area, a navigation route that is separated from the prohibited area. In this way, the navigation route can be accurately customized, to prevent the navigation route from passing by the areas which the users do not want to enter and ensure that the navigation route is more in line with the actual needs and the preferences of the users, thereby enhancing the user experience of the navigation service.

## Description

### FIELD

Embodiments of the present disclosure generally relates to the information technology field, and more specifically, to method, device and computer program product for navigation.

### BACKGROUND

Navigation technology is a typical application of information technology. Navigation technology is a fusion of technologies from multiple fields, such a satellite positioning, Geographic Information System (GIS), wireless communication technology, computer processing and graphical display techniques etc., to provide real-time and accurate positioning, navigation and route planning services to users. With the advance of technology, the navigation technology has been extensively applied in various fields including automobile navigation, map application of mobile phone, aviation and nautical fields and intelligent transportation systems etc.

Existing navigation systems can quickly calculate the optimal or alternative multiple driving routes based on the starting point and the end point set by the users using advanced algorithms and big data analysis. The navigation systems can take into account various factors including road conditions, traffic congestion, distance and driving time etc. for efficient route planning. After the planning is completed, the routes usually are straightforwardly displayed on the navigation map in clear lines for users' understanding and selection.

### SUMMARY

Embodiments of the present disclosure provide a solution for navigation, to provide individualized navigation route planning service, thereby ensuring that the navigation routes are more in line with the actual needs and the preferences of the users.

According to a first aspect of the present disclosure, there is provided a method for navigation. The method comprises receiving an indication of a prohibited area input by users; and generating, based on the indication of the prohibited area, a navigation route that is separated from the prohibited area.

In a second aspect of the present disclosure, there is provided a device for navigation, comprising a processor; and a memory coupled to the processor and stored with instructions, the instructions, when executed by the processor, causing the device to: receive an indication of a prohibited area input by users; and generate, based on the indication of the prohibited area, a navigation route that is separated from the prohibited area.

In a third aspect of the present disclosure, there is provided an apparatus for navigation, comprising a unit for receiving prohibition indication and a unit for generating navigation route. The unit for receiving prohibition indication is configured to receive an indication of a prohibited area input by users. The unit for generating navigation route is configured to generate, based on the indication of the prohibited area, a navigation route that is separated from the prohibited area.

In a fourth aspect of the present disclosure, there is provided a computer-readable storage medium stored with computer-executable instructions thereon, wherein the computer-executable instructions, when executed, cause a computer to perform the method according to the first aspect.

In a fifth aspect of the present disclosure, there is provided a computer program product. The computer program product is tangibly stored on a non-volatile computer-readable medium and comprises machine-executable instructions, wherein the machine-executable instructions, when executed, cause a machine to perform the method according to the first aspect.

The summary is intended to introduce a selection of concepts in a simplified form, and they will be further described below in the detailed description. The summary is not intended to identify key features or essential features of the claimed subject matter, nor is it intended to limit the scope of the claimed subject matter.

### BRIEF DESCRIPTION OF THE DRAWINGS

The above and other objectives, features and advantages of the present disclosure will become more apparent through the following detailed description of the example embodiments of the present disclosure with reference to the drawings. In the drawings:
Fig. 1 illustrate s a schematic diagram of an example environment in which embodiments of the present disclosure can be implemented;
Fig. 2 illustrate s a schematic flowchart of a method for navigation in accordance with embodiments of the present disclosure;
Fig. 3 illustrate s a schematic flowchart of a method for generating a prohibited area in accordance with embodiments of the present disclosure;
Figs. 4A and 4B illustrate effect maps after the map coordinates are smoothed in accordance with embodiments of the present disclosure;
Fig. 5 illustrates a schematic block diagram of an apparatus for navigation in accordance with embodiments of the present disclosure;
Fig. 6 illustrates a schematic block diagram of an example device for implementing embodiments of the present disclosure.

Throughout the drawings, the same or similar reference numerals refer to the same or similar elements.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be interpreted as being limited to the embodiments set forth herein, on the contrary, these embodiments are provided for a more thorough and complete understanding of the present disclosure. It should be understood that the drawings and embodiments of the present disclosure are only for exemplary purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "first", "second", etc. may refer to different or same objects, unless explicitly stated.

Navigation systems currently can plan an optimal or a feasible driving route for users based on a starting point and an end point set by the users with reference to multi-dimensional data, such as the obtained real-time traffic information and geographic information etc. Some navigation systems are also provided with a function of setting up a key point or a key area. Navigation systems can plan a route via the key point or the key area in accordance with the key point and the key area designated by the users, such that the users can customize with respect to the point passing by.

Although navigation systems can comprehensively consider various factors for route planning, it is hard to capture individualized needs and special taboos of every user. For example, users may be reluctant to pass by certain areas due to their security issues, poor road surface conditions, strict systems for fines of traffic violations, lack of night lighting or inaccessibility to certain plate numbers. However, most of the existing navigation systems are incapable of directly identifying and excluding these special areas. As a result, the automatically planed routes may deviate from the actual needs and preferences of the users. Therefore, although the existing navigation systems can plan the routes, they still need to be improved to satisfy individualized and sophisticated needs of the users. It is now a great challenge in navigation technology field to devise a more intelligent, flexible and individualized navigation technique, to better satisfy the diversified needs of the users.

On this basis, embodiments of the present disclosure provide a solution for navigation. The solution may accurately customize the navigation route to ensure that the navigation route is more in line with the actual needs and preferences of the users, thereby enhancing intelligence and individuation level of the navigation services. The method in accordance with embodiments of the present disclosure first receives an indication of a prohibited area input by users, generates a navigation route that is separated from the prohibited area in accordance with the indication of the prohibited area, and displays the navigation route on a navigation map of an interface.

Here, the navigation route that is separated from the prohibited area refers to that the navigation route avoids the area set as "prohibited area", i.e., the navigation route completely bypasses the prohibited area without intersecting with or being tangent to the prohibited area. Unlike the traditional solution, the method of the present application can receive the indication of the prohibited area input by users, generate a navigation route that is separated from the prohibited area in accordance with the indication of the prohibited area, and display the navigation routes on the navigation map of the interface for users' selection. Therefore, the special areas which the users intend to exclude can be avoided during route planning, to individualize the navigation routes and enhance user experience.

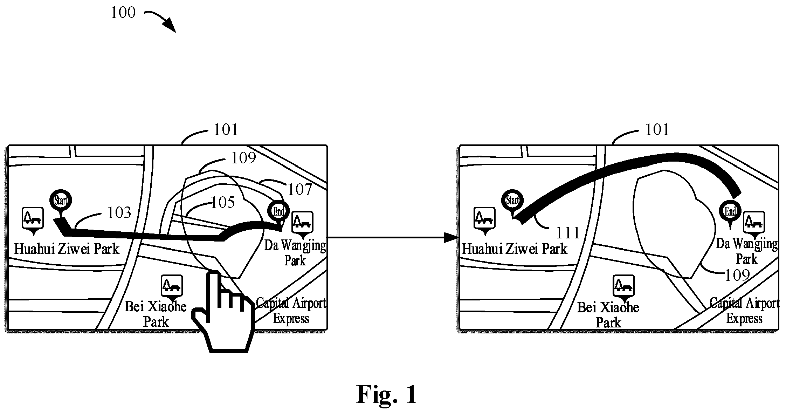

Basic principle and several example implementations of the present disclosure are explained below with reference to Figs. 1 to 6. It is to be understood that these example embodiments are provided merely for enabling those skilled in the art to better understand and further implement the embodiments of the present disclosure, rather than restricting the present disclosure in any ways.

Fig. 1 illustrates a schematic diagram of an example environment 100 in which the device and/or the method in accordance with embodiments of the present disclosure may be implemented. As shown in Fig. 1, in some embodiments, the example environment 100 may include an interface 101 and the navigation map may be displayed on the interface 101 to present the geographic information to the users in a visualized manner. Before planning the route, the navigation system may first receive the starting point and the end point input by the users and then plan the route based on the starting point and the end point. For example, the users input "Huahui Ziwei Park" as the starting point and "Da Wangjing Park" as the end point. The navigation system may plan one or multiple routes between "Huahui Ziwei Park" and "Da Wangjing Park".

In some embodiments, the navigation system plans a route 103, a route 107 and a route 109 and displays the three routes on the interface 101. The calculated routes are then evaluated to determine the optimal one. Evaluation criteria may include estimated driving time, distance, fuel/electricity consumption, safety and user-defined preference weights etc. As shown in Fig. 1, when the route 103 is evaluated as the optimal route, the navigation system may distinguish different routes using a visual differentiation design. For example, the optimal route 103 may be highlighted in striking colors, while other routes are represented in light colors or different linetypes. Besides, the detailed information of each route, such as estimated driving time and distance etc., is also presented on the interface 101 in a comprehensible way for users' reference and selection.

In accordance with embodiments of the present disclosure, when the route planned by the navigation system does not conform to the actual needs of the users, the users may input the indication of the prohibited area, to ensure that the navigation system is more in line with personal preferences and actual needs. The indication of the prohibited area may be a touch operation on the interface 101 by the user, or voice data input by the users, or text data etc. The details of the indication may be selected in view of the actual needs and the form of the indication of the prohibited area is not restricted in the present disclosure.

According to Fig. 1, when the users perform the touch operation on the interface 101, a prohibition graphic 109 corresponding to the touch operation may be displayed on the interface 101. The prohibition graphic 109 represents a user-designated geographic area or route section which the users do not want the navigation system to include in its planned routes. The prohibition graphic 109 may be a shape drawn by any users through the touch operation, e.g., triangle, circle, rectangle, or other polygons etc. for indicating the specific area which the users expect to avoid. After the users complete the input of the prohibition graphic 109, the navigation system may recalculate based on the position and the scope of the prohibition graphic 109 and generate one or multiple new routes. In the embodiments of the present disclosure, the re-generated route 11 is separated from the prohibition graphic 109, to follow the navigation intentions of the users, i.e., the route would not pass by the prohibited area designated by the users.

In this way, the navigation route can be accurately customized, to prevent the navigation route from passing by the areas which the users do not want to enter and ensure that the navigation route is more in line with the actual needs and the preferences of the users, thereby enhancing the intelligence and individuation level of the navigation service and improving user experience.

The schematic diagram of the example environment 100 in which the embodiments of the present disclosure can be implemented has been described above with reference to Fig. 1. It is to be appreciated that the environment 100 only exemplarily illustrates the scope of the present disclosure, rather than restricts it. The environment 100 may include more components not shown in Fig. 1 and various components in the environment 100 also may be implemented in different ways.

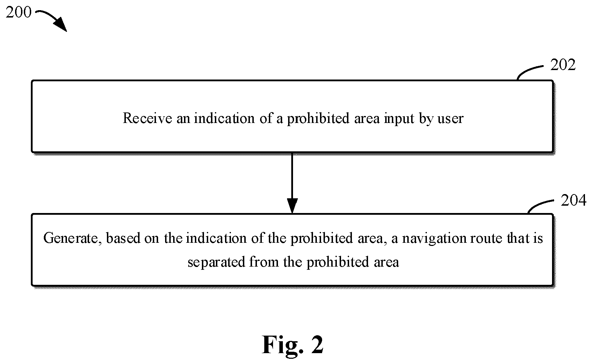

Next, a flowchart of a method 200 for navigation in accordance with embodiments of the present disclosure is described with reference to Fig. 2. At block 202, an indication of the prohibited area input by the users is received. For example, as shown in Fig. 1, when the route planned by the navigation system fails to conform to the actual needs of the users, the users may input the indication of the prohibited area, to ensure that the navigation service is more in line with personal preferences and actual needs. Of course, the users also may input the indication of the prohibited area in advance before the navigation system plans the route. The details may be selected in accordance with the actual needs.

In the embodiments of the present disclosure, the indication of the prohibited area received by the navigation system may be the touch operation on the interface 101 by the users. The users may draw the prohibition graphic 109 by directly performing the touch operation on the interface 101, e.g., outlining the boundary of the area which the users expect to avoid by fingers or a touch pen. This approach is straightforward and easy to operate. Besides, the indication of the prohibited area also may be an indication input by the users via voice, i.e., the users say the name of the place or area which they expect to avoid. The navigation system parses the voice data of the users with a voice recognition technique and displays on the interface 101 a corresponding prohibited area.

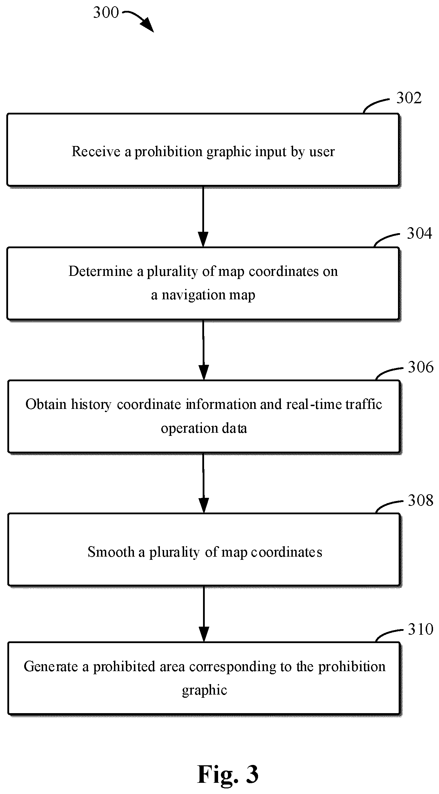

At block 204, the navigation route that is separated from the prohibited area is generated based on the indication of the prohibited area. For example, as shown in Fig, 1, when the users perform the touch operation on the interface 101, the prohibition graphic 109 corresponding to the touch operation may be displayed on the interface 101, where the prohibition graphic 109 is used for indicating the special area which the users expect to avoid. After the users complete the input of the prohibition graphic 109, the navigation system may recalculate based on the position and the scope of the prohibition graphic 109 and generate one or multiple new routes. In the embodiments of the present disclosure, the regenerated route 111 is separated from the prohibition graphic 109 to follow the navigation intentions of the users, i.e., the route would not pass by the prohibited area designated by the users. Example implementations for generating the navigation routes in accordance with embodiments of the present disclosure are to be described below with reference to Figs. 3 to 6.

In some embodiments, the navigation route may be displayed on the navigation map of the interface. For example, as shown in Fig. 1, when the navigation system regenerates the route according to the indication of the prohibited area input by the users, the route may be displayed on the navigation map of the interface 101, to indicate the users that the newly planned route is separated from the specific area which the users expect to avoid. When the navigation system regenerates multiple routes, the multiple routes may be displayed simultaneously on the navigation map of the interface 101 for users' selection. In the embodiments of the present disclosure, the route 111 is a newly generated route and the newly generated route 111 is separated from the prohibition graphic 109, to follow the navigation intentions of the users, i.e., this route would not pass by the prohibited area designated by the users.

According to the method 200 illustrated in Fig. 2, embodiments of the present disclosure generate navigation routes that are separated from the prohibited area in accordance with the indication of the prohibited area input by the users and displays the navigation routes on the navigation map for users' selection, such that the navigation system can customize the navigation routes according to the users' needs and prevent the navigation routes from passing by the area which the users do not want to enter, thereby ensuring that the navigation service is more in line with personal preferences and actual needs.

Fig. 3 illustrates a schematic flowchart of a method for generating a prohibited area in accordance with embodiments of the present disclosure. In some embodiments, the navigation system may provide a separate component for generating the prohibited area to implement the procedure shown in Fig. 3. At block 302, the prohibition graphic input by the users is received. For example, as shown in Fig. 1, in case that the indication of the prohibited area input by the users is the touch operation, the user-input prohibition graphic 109 corresponding to the touch operation may be received by the navigation system, where the prohibition graphic 109 indicates the specific area which the users expect to avoid.

At block 304, a plurality of map coordinates is determined on the navigation map. For example, as shown in Fig. 1, in case that the indication of the prohibited area input by the users is the touch operation, in order to determine the position and the scope of the prohibited area, a plurality of map coordinates corresponding to the prohibition graphic 109 is determined on the navigation map after the prohibition graphic 109 corresponding to the touch operation is received, and the prohibition graphic 109 also may be displayed on the navigation map of the interface 101 in accordance with a plurality of map coordinates. A mapping method between the prohibition graphic 109 and the map coordinate may be a regular coordinate mapping method, which for example, may be implemented by an Application Programming Interface (API) of the navigation system. The details may be selected according to the actual needs and will not be repeated here.

At block 306, history coordinate information and real-time traffic operation data are obtained. In some embodiments, to more accurately understand the users' intentions, i.e., the specific areas which the users intend to avoid during navigation, a plurality of map coordinates may be processed according to the history navigation data of the users. The history coordinate information may include the prohibited areas previously input by the users as recorded in the navigation system. In the subsequent navigation procedure, the navigation system may avoid re-planning the routes passing by these areas in accordance with the history coordinate information. For example, when the users only partially circle an area, the navigation system combine with the history coordinate information in the past navigation records, especially the coordinate information of the avoided areas; if the current area semi-circled by the users is significantly overlapping with or adjacent to a certain area which has been avoided frequently by the users in history, the navigation system can deduce the potential intentions of the users, i.e., the users may expect to continue avoiding the entire area, rather than the portion currently displayed on the interface. Moreover, the history coordinate information also may include a type of the user-defined prohibited area in accordance with their travel habits and needs, e.g., construction area, toll section and high pollution area etc., to facilitate the navigation system to more accurately satisfy the individualized needs.

In some embodiments, the navigation system also may obtain the real-time traffic operation data in addition to the history coordinate information, where the real-time traffic operation data may include traffic congestion information, traffic accident information, road construction information and weather conditions etc. The real-time traffic operation data are taken into account during the navigation, to greatly enhance the accuracy and efficiency for route planning and help the users avoiding congestions, accidents or other disadvantageous conditions.

At block 308, a plurality of map coordinates are smoothed. In some embodiments, a plurality of map coordinates are smoothed according to the history coordinate information, such that the prohibited area generated after the smoothing process is more in line with the users' intentions and is consistent with the area which the users intend to avoid. The procedure of smoothing a plurality of map coordinates may be understood as optimizing the prohibition graphic input by the users. The smoothing process may include adjusting the boundary of the prohibition graphic, to generate smooth, natural and closed boundary of the prohibited area. The smoothing process also may include adjusting the scope of the prohibition graphic, such that the generated prohibited area after the smoothing process is more in line with the actual area which the users intend to avoid. The smoothing process may use a plurality of smoothing algorithms, such as curve fitting and Bézier curve interpolation etc. The details may be selected according to the actual needs.

In some embodiments, a plurality of map coordinates also may be smoothed based on the real-time traffic operation data; the navigation map can obtain the information like traffic conditions and the road changes etc. in real time and optimize the prohibited area input by the users according to the information, to ensure that the users can avoid congestions, accidents or other disadvantageous conditions.

At block 310, the prohibited area corresponding to the prohibition graphic is generated. In the embodiments of the present disclosure, after the prohibition graphic input by the users is received, the prohibition graphic is mapped to a plurality of map coordinates of the navigation map. Then, a plurality of map coordinates is smoothed according to the history coordinate information and the real-time traffic operation data, to optimize the prohibition graphic input by the users and generate the prohibited area more in line with the actual intentions of the users. Besides, the generated prohibited area may be displayed on the navigation map of the interface for further confirmation or modification by users.

In some embodiments, the users may draw a plurality of prohibition graphics on the interface; when a plurality of prohibition graphics are separated from one another, the navigation system may generate a plurality of prohibited areas corresponding to the prohibition graphics and then plan the routes that are separated from the plurality of prohibited areas, to prevent the navigation routes from passing by each of the prohibited areas which the users do not want to enter. When a plurality of prohibition graphics intersect and produce overlapping areas, the navigation system may merge a plurality of prohibition graphics to generate a prohibited area. The merged prohibited area may use a uniform boundary, which may be optimized through smoothing process to look more natural.

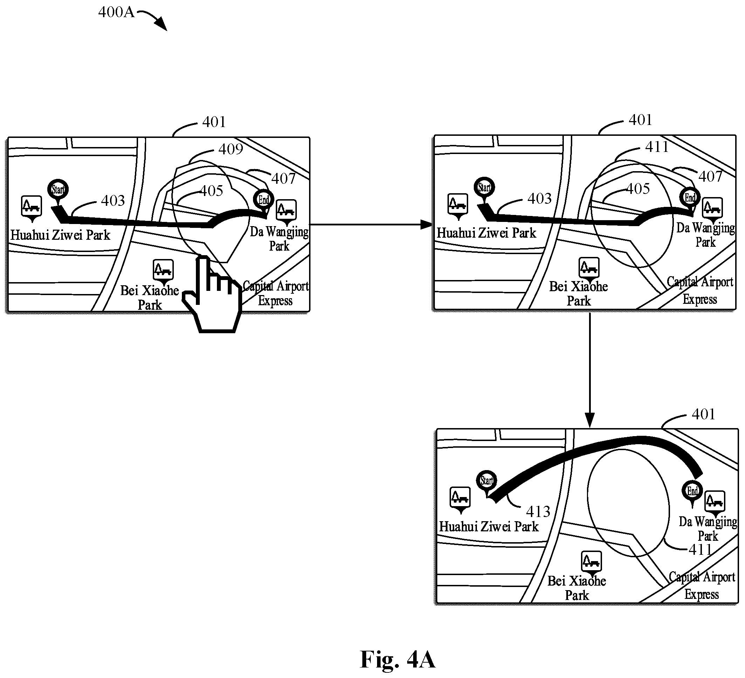

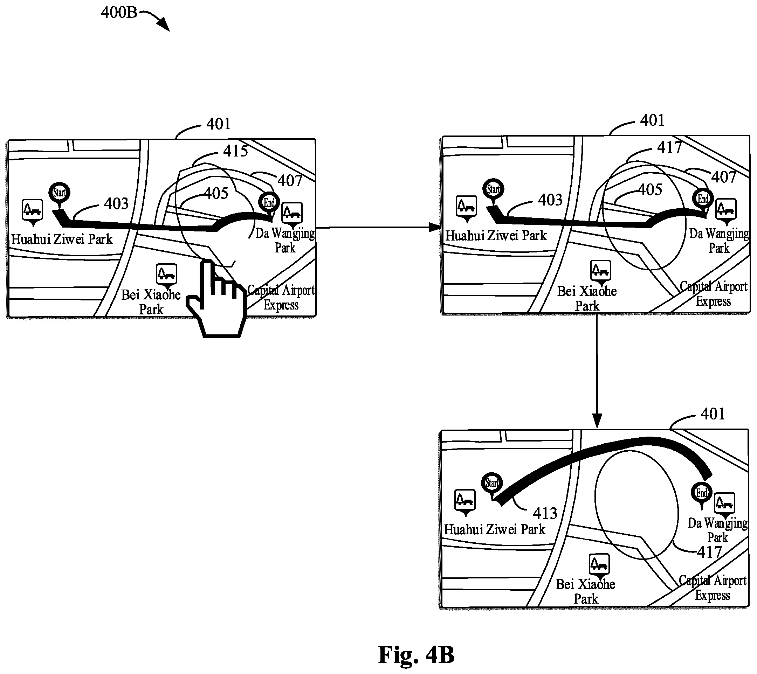

Figs. 4A and 4B illustrate effect maps after the map coordinates are smoothed in accordance with embodiments of the present disclosure. As shown in Fig. 4A, the navigation system displays a route 403, a route 405 and a route 407 on the interface 401 based on the starting point and the end point input by the users. The users input the indication of the prohibited area, i.e., prohibition graphic 409, through the touch operation. The navigation system maps the prohibition graphic 409 to a plurality of map coordinates and smooths the map coordinates to generate the prohibited area 411. The smoothing process may include adjusting the boundary of the prohibition graphic, such that the generated prohibited area has a more smooth and natural boundary. The smoothing process also may include adjusting the scope of the prohibition graphic, such that the generated prohibited area is more in line with the actual area which the users intend to avoid. The smoothing process may use a plurality of smoothing algorithms, such as curve fitting and Bézier curve interpolation etc. The details may be selected according to the actual needs. In the end, a new navigation route 413 is generated based on the smoothed prohibited area 411 and the new route 413 is displayed on the navigation map of the interface 401.

According to Fig. 4B, when users input one or more prohibition graphics, the map coordinates corresponding to the prohibition graphics are discrete; for example, the prohibition graphic 415 is not a head-to-tail figure. The prohibition graphic 415 outlines the boundary of the actual area which the users intend to avoid in a partially accurate way. In order to enhance user experience and navigation accuracy, the navigation system would smooth the discrete coordinate points, to generate a smooth and enclosed prohibition graphic 417.

In some embodiments, a history prohibited area control also may be displayed on the interface 401. In response to a touch operation on the history prohibited area control by users, at least one history prohibited area may be displayed on the interface 401, where the history prohibited area is a prohibited area previously selected by the users. The users may select among a plurality of history prohibited areas and smoothed prohibited areas and the navigation system generates the navigation route based on the area selected by the users and displays the navigation route on the interface 401.

In some embodiments, the navigation system also may group a plurality of history prohibited areas based on a strategy input by the users and assign different priorities or rules to each group. For example, one group may represent the prohibited area for weekdays and another group may indicate the prohibited area for weekends. The grouped history prohibited areas may be automatically switched during navigation depending on the current time or the conditions set by the users. The navigation system plans the navigation routes based on the history prohibited areas in different periods of times or under various conditions, to enhance user experience and navigation efficiency.

In some embodiments, a prohibited area drawing control also may be displayed on the interface 401. In response to the touch operation on the prohibited area drawing control on the interface by the users, the prohibited areas displayed on the interface 401 may be cleared for users to redraw.

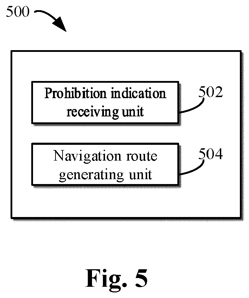

Fig. 5 illustrates a schematic block diagram of an apparatus for navigation in accordance with embodiments of the present disclosure.

As shown, the apparatus 500 comprises a unit for receiving prohibition indication 502 and a unit for generating navigation route 504. The unit for receiving prohibition indication 502 is configured to receive an indication of a prohibited area input by users. The unit for generating navigation route 504 is configured to generate, based on the indication of the prohibited area, a navigation route that is separated from the prohibited area.

In some embodiments, the prohibition indication receiving unit 502 also may be configured to: receive a prohibition graphic input by users in response to a touch operation on the interface by users.

In some embodiments, the navigation route generating unit 504 also may be configured to: determine, based on the prohibition graphic, a plurality of map coordinates corresponding to the touch operation on the navigation map; generate, based on the plurality of map coordinates, a prohibited area corresponding to the prohibition graphic; and generate, based on the prohibited area, the navigation route that is separated from the prohibited area.

In some embodiments, the navigation route generating unit 504 also may be configured to: obtain history map coordinate information; smooth, based on the history map coordinate information, the plurality of map coordinates; and generate, based on the smoothed plurality of map coordinates, a prohibited area corresponding to the prohibition graphic.

In some embodiments, the navigation route generating unit 504 also may be configured to: obtain real-time traffic data; smooth, based on the real-time traffic data, the plurality of map coordinates; and generate, based on the smoothed plurality of map coordinates, a prohibited area corresponding to the prohibition graphic.

In some embodiments, the navigation route generating unit 504 also may be configured to: determine whether the plurality of map coordinates is in continuous state or in discrete state; in response to the plurality of map coordinates being in discrete state, connect discrete map coordinates with a smooth line; and smooth a connected plurality of map coordinates.

In some embodiments, the apparatus 500 also comprises a unit for displaying history prohibited area and a unit for displaying a first navigation route. The unit for displaying history prohibited area is configured to display at least one history prohibited area in response to a touch operation on a history prohibited area control on an interface by users. The unit for displaying a first navigation route is configured to display on the interface a navigation route that is separated from the first prohibited area in response to selecting a first prohibited area in the at least one history prohibited area by users.

In some embodiments, the prohibition indication receiving unit 502 also may be configured to: in response to a touch operation on a prohibited area drawing control on an interface by users, clear prohibited areas displayed on the interface; and in response to a touch operation on the interface by users, receive a prohibited area input by users.

In some embodiments, the prohibition indication receiving unit 502 also may be configured to: in response to a touch operation on a voice control on the interface by users, receive voice data input by users.

In some embodiments, the apparatus 500 also comprises a unit for displaying navigation route. The unit for displaying navigation route is configured to display on a navigation map of an interface the navigation route and the prohibited area.

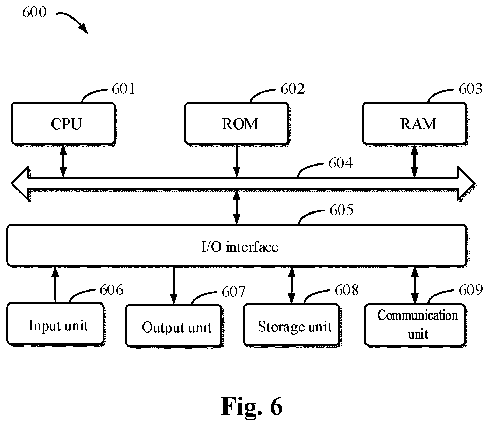

Fig. 6 shows a schematic block diagram of an example device 600 for implementing some embodiments of the present disclosure. As shown in Fig. 6, the device 600 includes a central processing unit (CPU) 601, which may perform a variety of appropriate actions and processes according to computer program instructions stored in a read-only memory (ROM) 602 or computer program instructions loaded from a storage unit 608 into a random-access memory (RAM) 603. Various programs and data required for the operation of the device 600 may also be stored in the RAM 603. The CPU 601, ROM 602, and RAM 603 are connected to each other through a bus 604. An input/output (I/O) interface 605 is also connected to the bus 604.

A plurality of components in the device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices through computer networks such as the Internet and/or various telecommunication networks.

The various procedures or processes described above, such as method 200, may be implemented by the CPU 601. For example, in some embodiments, the method 200 may be implemented as a computer software program, which is tangibly contained in a machine-readable medium, such as the storage unit 608. In some embodiments, part or all of the computer program may be loaded and/or installed onto the device 600 via the ROM 602 and/or the communication unit 609. When the computer program is loaded into the RAM 603 and executed by the CPU 601, one or more steps or actions in the method 200 described above may be performed.

The present disclosure may be method, device, apparatus, system, and/or computer program product. The computer program product may include a computer-readable storage medium having computer-readable program instructions loaded thereon for performing various aspects of the present disclosure.

The computer-readable storage medium may be a tangible device that can hold and store instructions used by the instruction execution device. The computer-readable storage medium may be, for example, but not limited to, an electrical storage device, a magnetic storage device, an optical storage device, an electromagnetic storage device, a semiconductor storage device, or any suitable combination thereof. More specific examples (non-exhaustive list) of the computer-readable storage medium include: portable computer disk, hard disk, random access memory (RAM), read-only memory (ROM), erasable programmable read-only memory (EPROM or flash memory), static random access memory (SRAM), portable compact disk read-only memory (CD-ROM), digital versatile disk (DVD), memory stick, floppy disk, mechanical encoding device, such as punched card or groove and bulge structure having instructions stored thereon, and any suitable combination thereof. The computer-readable storage medium used here is not interpreted as the instantaneous signal itself, such as radio waves or other freely propagating electromagnetic waves, electromagnetic waves propagating through waveguides or other transmission media (for example, light pulses through fiber optic cables), or electrical signals transmitted through wires.

The computer-readable program instructions described herein may be downloaded from a computer-readable storage medium to various computing/processing devices or downloaded to an external computer or an external storage device via a network such as the Internet, a local area network, a wide area network, and/or a wireless network. The network may include copper transmission cables, optical fiber transmission, wireless transmission, routers, firewalls, switches, gateway computers, and/or edge servers. The network adapter card or network interface in each computing/processing device receives computer-readable program instructions from the network and forwards the computer-readable program instructions for storage in the computer-readable storage medium in the respective computing/processing device.

The computer program instructions for performing the operations of the present disclosure may be assembly instructions, instruction set architecture (ISA) instructions, machine instructions, machine-related instructions, microcode, firmware instructions, state setting data, or source code or target code written in any combination of one or more programming languages, including object-oriented programming languages, e.g., Smalltalk and C++ etc., and conventional procedural programming languages such as "C" language or similar programming languages. The computer-readable program instructions may be executed entirely on a user's computer, partly on a user's computer, as a stand-alone software package, partly on a user's computer and partly on a remote computer, or entirely on a remote computer or a server. In the case of involving a remote computer, the remote computer may be connected to a user's computer through any kind of network, including a local area network (LAN) or a wide area network (WAN), or may be connected to an external computer (for example, via the Internet through an Internet service provider). In some embodiments, an electronic circuit such as a programmable logic circuit, a field programmable gate array (FPGA), or a programmable logic array (PLA) is customized by using state information of the computer-readable program instructions, and the electronic circuit may execute the computer-readable program instructions, thereby implementing various aspects of the present disclosure.

Various aspects of the present disclosure are described here with reference to flow chart and/or block diagram of method, apparatus (system) and computer program products according to embodiments of the present disclosure. It should be understood that each block of the flow chart and/or block diagram and the combination of various blocks in the flow chart and/or block diagram can be implemented by computer-readable program instructions.

The computer-readable program instructions can be provided to the processing unit of general-purpose computer, dedicated computer or other programmable data processing apparatuses to manufacture a machine, such that the instructions that, when executed by the processing unit of the computer or other programmable data processing apparatuses, generate an apparatus for implementing functions/actions stipulated in one or more blocks in the flow chart and/or block diagram. The computer-readable program instructions can also be stored in the computer-readable storage medium and cause the computer, programmable data processing apparatus and/or other devices to work in a particular manner, such that the computer-readable medium stored with instructions comprises an article of manufacture, including instructions for implementing various aspects of the functions/actions stipulated in one or more blocks of the flow chart and/or block diagram.

The computer-readable program instructions can also be loaded into computer, other programmable data processing apparatuses or other devices, so as to execute a series of operation steps on the computer, other programmable data processing apparatuses or other devices to generate a computer-implemented procedure. Therefore, the instructions executed on the computer, other programmable data processing apparatuses or other devices implement functions/actions stipulated in one or more blocks of the flow chart and/or block diagram.

The flow chart and block diagram in the drawings illustrate system architecture, functions and operations that may be implemented by system, method and computer program product according to multiple implementations of the present disclosure. In this regard, each block in the flow chart or block diagram can represent a module, a part of program segment or code, wherein the module and the part of program segment or code include one or more executable instructions for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Various embodiments of the present disclosure have been described above and the above description is only exemplary rather than exhaustive and is not limited to the embodiments of the present disclosure. The selection for terms in the text aims to best explain principles and actual applications of each embodiment and technical improvements made in the market by each embodiment, or enable those ordinary skilled in the art to understand embodiments of the present disclosure.

## Claims

1. A method, preferably a computer-implemented method, for navigation, comprising:
receiving (202) an indication of a prohibited area input by a user; and
generating (204), based on the indication of the prohibited area, a navigation route that is separated from the prohibited area.

2. The method according to claim 1, wherein receiving (202) the indication of the prohibited area input by the user comprises:
in response to a touch operation on an interface by the user, receiving (302) a prohibition graphic input by the user.

3. The method according to claim 2, wherein generating (204) the navigation route that is separated from the prohibited area comprises:
determining (304), based on the prohibition graphic, a plurality of map coordinates corresponding to the touch operation on a navigation map;
generating (310), based on the plurality of map coordinates, the prohibited area corresponding to the prohibition graphic; and
generating, based on the prohibited area, the navigation route that is separated from the prohibited area.

4. The method according to claim 3, wherein generating (310) the prohibited area corresponding to the prohibition graphic comprises:
obtaining (306) history map coordinate information;
smoothing (308), based on the history map coordinate information, the plurality of map coordinates; and
generating (310), based on the smoothed plurality of map coordinates, the prohibited area corresponding to the prohibition graphic.

5. The method according to claim 3, wherein generating (310) the prohibited area corresponding to the prohibition graphic comprises:
obtaining (306) real-time traffic data;
smoothing (308), based on the real-time traffic data, the plurality of map coordinates; and
generating (310), based on the smoothed plurality of map coordinates, the prohibited area corresponding to the prohibition graphic.

6. The method according to claim 4 or 5, wherein smoothing (308) the plurality of map coordinates comprises:
determining whether the plurality of map coordinates are in continuous state or in discrete state;
in response to the plurality of map coordinates being in discrete state, connecting discrete map coordinates with a smooth line; and
smoothing the connected plurality of map coordinates.

7. The method according to any one of claims 1 to 6, further comprising:
in response to a touch operation on a history prohibited area control on an interface by the user, displaying at least one history prohibited area; and
in response to selecting a first prohibited area in the at least one history prohibited area by the user, displaying, on the interface, a navigation route that is separated from the first prohibited area.

8. The method according to any one claims 1 to 7, wherein receiving (202) the indication of the prohibited area input by the user comprises:
in response to a touch operation on a prohibited area drawing control on an interface by the user, clearing a prohibited area displayed on the interface; and
in response to a touch operation on the interface by users, receiving the prohibited area input by users.

9. The method according to any one of claims 1 to 8, wherein receiving (202) the indication of the prohibited area input by the user comprises:
in response to a touch operation on a voice control on the interface by the user, receiving voice data input by the user.

10. The method according to any one of claims 1 to 9, further comprising:
displaying on a navigation map of an interface the navigation route and the prohibited area.

11. A device for navigation, comprising:
a processor; and
a memory coupled to the processor and stored with instructions, the instructions, when executed by the processor, causing the device to:
receive (202) an indication of a prohibited area input by a user; and
generate (204), based on the indication of the prohibited area, a navigation route that is separated from the prohibited area.

12. A computer-readable storage medium stored with computer-executable instructions thereon, wherein the computer-executable instructions, when executed, cause a computer to perform steps of the method according to any of claims 1-10.

13. A computer program product tangibly stored on a non-volatile computer-readable medium and comprising machine-executable instructions, wherein the machine-executable instructions, when executed, cause a machine to perform steps of the method according to any of claims 1-10**.**
